# EUROPÄISCHE PATENTSCHRIFT

(11) **EP 1 673 907 B1**
(45) Veröffentlichungstag und Bekanntmachung des Hinweises auf die Patenterteilung: **02.11.2016**
(21) Anmeldenummer: 04787231.2
(22) Anmeldetag: 28.09.2004
(51) Int. Cl.: H04L 12/58, G06Q 10/00

(54) **VERSAND VON NACHRICHTEN MIT EMPFÄNGERSPEZIFISCHEN NACHRICHTENTEILEN AN MINDESTENS ZWEI EMPFÄNGER**
DISTRIBUTION OF MESSAGES CONTAINING ADDRESSEE SPECIFIC MESSAGE PARTS TO AT LEAST TWO ADDRESSEES
DIFFUSION D'INFORMATIONS AVEC PARTIES DE CES INFORMATIONS SPÉCIFIQUES POUR LE DESTINATAIRE, A AU MOINS DEUX DESTINATAIRES

(30) Priorität: 02.10.2003 DE 10346016
(43) Veröffentlichungstag der Anmeldung: 28.06.2006
(73) Patentinhaber: QUALCOMM Incorporated, San Diego, CA 92121-1714 (US)
(72) Erfinder: BECKMANN, Mark, 38124 Braunschweig (DE); ECKERT, Michael, 38122 Braunschweig (DE); SCHMIDT, Andreas, 38124 Braunschweig (DE)
(74) Vertreter: Samson & Partner Patentanwälte mbB
(86) Internationale Anmeldenummer: PCT/EP2004/052334
(87) Internationale Veröffentlichungsnummer: WO 2005/034451

(56) Entgegenhaltungen:
- GB-A- 2 374 488
- US-A1- 2002 013 817
- ANONYMOUS: "MIME types and manifest files" MOZILLA.ORG, 20. Februar 2001 (2001-02-20), XP002201284

## Beschreibung

Die Erfindung betrifft ein Verfahren und eine Vorrichtung zum Versand einer Nachricht mit mindestens einem als nur für mindestens einen ausgewählten Empfänger bestimmt gekennzeichneten Nachrichtenteil an mindestens zwei Empfänger über ein Kommunikationsnetz.

Beim Versenden von elektronischen Nachrichten, wie zum Beispiel Emails, Kurznachrichten (SMS), Multimedia-Nachrichten (MMS) etc. können mehrere Empfänger (Adressaten) angegeben werden. Diese Adressaten lassen sich kategorisieren in:
- 'An' (bzw. 'To') adressierte Empfänger, an die zum Beispiel eine Email unmittelbar gerichtet ist,
- 'CC' (Carbon Copy) adressierte Empfänger, die zum Beispiel die Email 'zur Information' erhalten sollen. Alle Empfänger der Email können sehen, wer CC-Adressat ist,
- 'BBC' (Blind Carbon Copy) adressierte Empfänger, die zum Beispiel die Email 'zur Information' erhalten. Kein weiterer Empfänger dieser Nachricht kann sehen, wer BCC-Adressat ist (außer der BCC-Adressat selbst).
Der Inhalt der Email ist für alle Empfänger derselbe, unabhängig davon, ob An-(To-), CC- oder BCC-Adressat ist.

US 2002/013817 A1 und GB 2 374 488 A offenbaren, eine E-Mail mit einem Anhang an verschiedene Empfänger so zu versenden, dass einige Empfänger die E-Mail und den Anhang und einige Empfänger die E-Mail ohne den Anhang erhalten. Hiefür lehren beide Druckschriften, senderseitig eine Anwendung (z.B. E-Mail-Programm/-Browser) zu verwenden, mittels der ein Nutzer definieren kann, welcher Empfänger nur die E-Mail und welcher Empfänger die E-Mail und den Anhang erhalten soll. Folglich liegt die Information, welcher Nachrichtentyp ((i) E-Mail und Anhang oder (ii) E-Mail ohne Anhang) an welchen Empfänger zu senden ist, nur in der senderseitigen Anwendung vor. Keine der Nachrichten (i) oder (ii) selbst enthält derartige Information.

Aufgabe der vorliegenden Erfindung ist es, eine effiziente und kosteneffektive Möglichkeit für den Versand von Nachrichtenteilen in einer Nachricht, die nur von bestimmten Empfängern gesehen werden sollen, vorzuschlagen.

Die Aufgabe wird erfindungsgemäß jeweils durch die Gegenstände der unabhängigen Patentansprüche gelöst. Weiterbildungen der Erfindung sind in den Unteransprüchen angegeben. Ein Kern der Erfindung besteht darin, dass in einer Nachricht mindes-tens ein Nachrichtenteil für mindestens einen Empfänger gekennzeichnet wird. Eine Nachricht mit dem Haupt-Nachrichtenteil und den empfängerspezifischen Nachrichtenteil(en) wird von einer Anwendung (Client) im Endgerät und/oder einem Server im Netzwerk generiert. Die Server-Funktionalität soll dafür erfindungsgemäß so erweitert werden, dass Nachrichten entsprechend ihren empfängerspezifischen Inhalten bzw. Nachrichtenelementen und der Zuordnung von Nachrichtenteilen zu den Empfängern generiert und versendet werden können. Die Client-Funktionalität soll so erweitert werden, dass der sendende Client teilnehmerspezifische Nachrichten entspechend der Kennzeichnung von Nachrichtenteilen zu den Empfängern erstellen und versenden kann und der Empfangs-Client Nachrichten empfangen und teilnehmerspezifische bzw. uninteressante Nachrichtenteile herausfiltern kann. Ein Nachrichtenteil kann dabei aus einem alphanumerischen Text, einer alphanumerischen Textdatei, einer Audiodatei, einer Videodatei, einer Bilddatei, einer Applikation und/oder einer sonstigen Datei bestehen. Nur der/die Empfänger, für den/die der gekennzeichnete Nachrichtenteil bestimmt ist, erhält neben der Nachricht auch den gekennzeichneten Nachrichtenteil und kann ihn dekodieren bzw. anzeigen. Selbstverständlich kann es auch mehrere gekennzeichnete Nachrichtenteile geben. Ein Vorteil des erfindungsgemäßen Verfahrens und der Vorrichtung besteht darin, dass auf sehr einfache Art und Weise Nachrichtenteile, die nur für bestimmte Empfänger bestimmt sind, in einer Nachricht versendet werden können. In einer besonders vorteilhaften Ausführung der Erfindung wird dafür ein neuer MIME-Type (Multipurpose Internet Mail Extensions, RFC822, Standard for the format of ARPA internet text messages, 08/1982) definiert, mit dessen Hilfe empfängerspezifische Nachrichtenteile definiert und bestimmten Empfängern zugeordnet werden können.

Dadurch wird eine sehr kosteneffektive und einfach zu implementierende Lösung vorgeschlagen.

Die Erfindung wird anhand eines in den Figuren dargestellten Ausführungsbeispiels näher erläutert. Im Einzelnen zeigen
- Figur 1: eine erfindungsgemäße Lösung mit einer Filterfunktion in einem Server,
- Figur 2: eine erfindungsgemäße Lösung mit einem filternden, sendenden Client,
- Figur 3: eine erfindungsgemäße Lösung mit einem filternden, empfangenen Client,
- Figur 4: einen vereinfacht dargestellten erfindungsgemäßen Server.

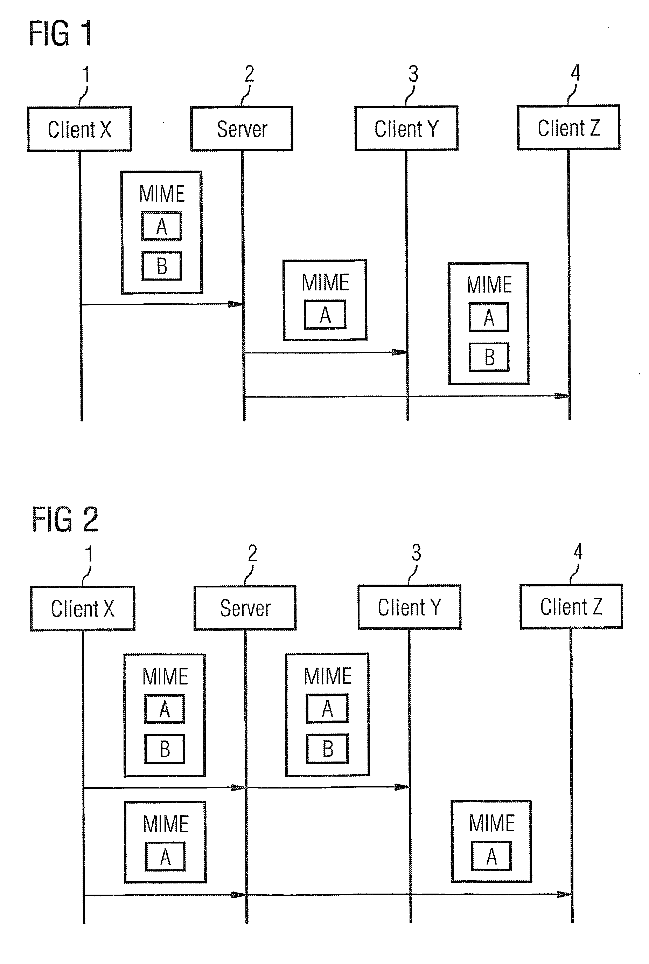

Figur 1 zeigt eine erfindungsgemäße Lösung mit einer Filterfunktion in einem Server 2. Für dieses Ausführungsbeispiel wird angenommen, dass Client X 1 eine Nachricht über einen Server 2 an Client Y 3 und Client Z 4 versenden möchte. Ein Client kann dabei ein Mobilfunkendgerät, ein Handheld, ein Computer, ein Notebook und/oder Ähnliches sein. Die Nachricht kann beispielsweise folgendermaßen aussehen: "
Von: Client X
Gesendet: 29 January 2003 09:05
An: Client Y
CC (Carbon Copy): Client Z
Subjekt: Abwesenheit

Hallo zusammen,
ich bin am 03.02.2003 nicht im Büro.
Client Z: Bitte trage mich in die Abwesenheitsliste ein. Danke.
   MfG,
Client X

### Beispiel 1

" Diese Nachricht besteht aus einem Hauptteil A, der für alle Empfänger 3, 4 der Nachricht derselbe ist, und einem Nachrichtenteil B, der nur für bestimmte Kommunikationsteilnehmer empfangbar (lesbar) sein soll bzw. interessant ist. Der Haupt-Nachrichtenteil A: "Hallo zusammen, ich bin am 03.02.2003 nicht im Büro. MfG, Client X" ist für alle Empfänger, d.h. Client Y 3 und Client Z 4 derselbe. Der Neben-Nachrichtenteil B ist in diesem Beispiel die Zeile "Client Z: Bitte trage mich in die Abwesenheitsliste ein. Danke." Dieser Teil ist nur für Client Z 4 interessant und soll daher nur für Client Z 4 empfangbar und/oder lesbar sein. In dieser Variante des erfindungsgemäßen Verfahrens generiert der sendende Client X 1 eine Nachricht, die alle Nachrichtenteile, d.h. den Hauptteil A und den Neben-Nachrichtenteil B enthält. Erfindungsgemäß beinhaltet diese Nachricht mindestens eine Kennzeichnung, welche zum einen die Nachrichtenteile definiert und zum anderen die Zuordnung von Nachrichtenteilen zu den einzelnen Empfängern 3, 4 enthält. Die Übertragung der Nachricht erfolgt in zwei Schritten: Zuerst sendet der Client X 1 die Nachricht mit den gekennzeichneten Nachrichtenteilen und der Zuordnung von Nachrichtenteilen zu den Empfängern 3, 4 an den Server 2. Im zweiten Schritt generiert der Server 2 aus der empfangenen Nachricht und den enthaltenen Kennzeichnungen, d.h. der Definition der Nachrichtenteile und der Zuordnung der Nachrichtenteile zu Empfängern, die empfängerspezifischen Nachrichten, die daraufhin an die entsprechenden Clients 3, 4 versendet werden. Beim Erstellen der Nachrichten im Server 2 könnte es zwei verschiedene Ansätze geben. Zum einen ist es möglich, dass man in den Kennzeichnungen vorgibt, welche Nachrichtenteile zu einem bestimmten Client 3, 4 nicht gesendet werden sollen (Schließe Client Y für Nachrichtenteil B aus). Zum anderen ist es möglich, dass man in den Kennzeichnungen angibt, welche Nachrichtenteile nur an bestimmte Clients 3, 4 gerichtet sind (Weise Nachrichtenteil B nur Client Z zu). Das Senden der Nachrichten vom Server 2 an die Empfänger-Clients 3, 4 erfolgt dann wie nach dem Stand der Technik, d.h. es ist keine zusätzliche Signalisierung erforderlich. Bei Verwendung von MIME (Multipurpose Internet Mail Extensions, RFC822, Standard for the format of ARPA internet text messages, 08/1982) muss der Server 2 nun erkennen, dass er die Nachrichtenteile selektiv betrachten und an die entsprechenden Clients 3, 4 versenden soll. Dafür soll erfindungsgemäß ein neuer MIME-Typ ,Message-Split' (Nachrichten-Trennung) eingeführt werden. Auf Grund des MIME-Types 'Message-Split' erkennt der Server 2, dass der gekennzeichnete Nachrichtenteil nur an einen bestimmten Empfänger 3, 4 gerichtet ist. Im folgenden Beispiel wird nun unter 'Message-Split' der Nachrichtenteil aufgeführt, der nur für den Client Z 4 interessant ist: "
Von: Client X
An: Client Y
CC: Client Z
Subjekt: Abwesenheit
*******Hier kommt der Teil, der für Client Y und Client Z ist.
Content-Typ: Text
Hallo zusammen,
ich bin am 03.02.2003 nicht im Büro.
*******Hier kommt der Teil, der erfindungsgemäß nur für Client Z ist!
Content-Typ: Message-Split
An: Client Z
Bitte trage mich in die Abwesenheitsliste ein. Danke.
*******Hier kommt der Teil, der für Client Y und Client Z ist.
Content-Typ: Text
MfG,
Client X "

Der Server 2 erkennt an dem erfindungsgemäßen MIME-Typ ,Message-Split', dass er die Nachricht trennen muss und sendet dann die folgenden Nachrichten an Client Y 3 bzw. Z 4 weiter: "
Von: Client X
Gesendet: 29 January 2003 09:05
An: Client Y
Subjekt: Abwesenheit
Hallo zusammen,
ich bin am 03.02.2003 nicht im Büro.
MfG,
Client X
"
und
"
Von: Client X
Gesendet: 29 January 2003 09:05
An: Client Z
Subjekt: Abwesenheit
Hallo zusammen,
ich bin am 03.02.2003 nicht im Büro.
Bitte trage mich in die Abwesenheitsliste ein. Danke.
MfG,
Client X "

Figur 2 zeigt eine erfindungsgemäße Lösung mit einem filternden sendenden Client X 1. Hier filtert der sendende Client X 1 die Nachricht bzw. die Nachrichtenteile, generiert zwei verschiedene Nachrichten und versendet diese separat. Im Beispiel sendet Client X 1 eine Nachricht, bestehend aus Hauptteil A und Neben-Nachrichtenteil B, an Client Y 3. Zusätzlich sendet er eine zweite Nachricht, die nur aus dem Hauptteil A besteht an den Client Z 4.

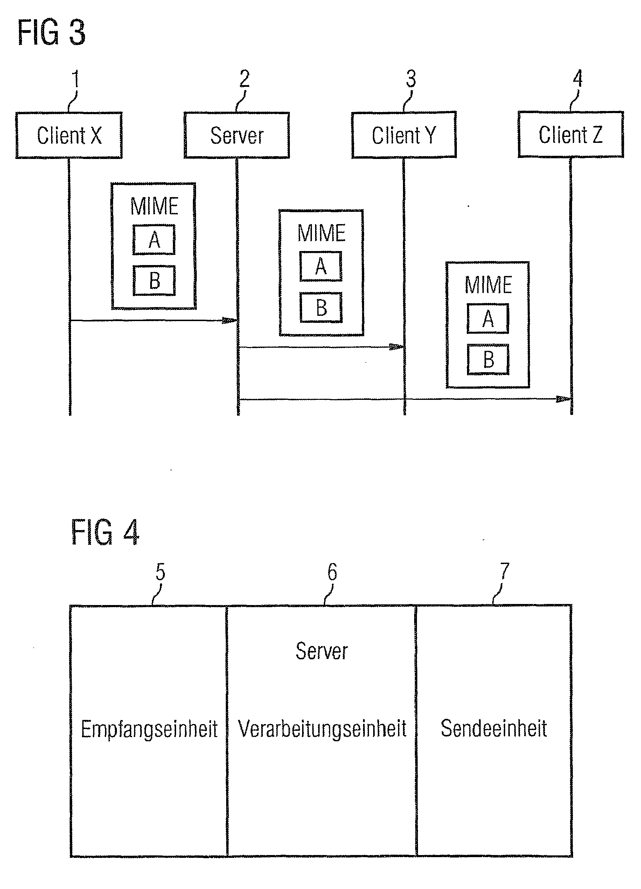

Figur 3 zeigt eine erfindungsgemäße Lösung mit einem filternden empfangenen Client 3, 4. Hier versendet Client X 1 nur eine Nachricht, die alle Nachrichtenteile enthält (d.h. Hauptteil A und Neben-Nachrichtenteil B). Die Empfänger-Clients 3, 4 filtern die Nachrichtenteile heraus, die für sie interessant bzw. nicht interessant sind. Dafür soll die Nachricht Kennzeichnungen enthalten, die zum einen die Nachrichtenteile definieren und zum anderen die Zuordnung von Nachrichtenteil zu Empfängern 3, 4 enthält. Zum Beispiel sendet Client X 1 die Nachricht, bestehend aus Hauptteil A und Neben-Nachrichtenteil B über einen Server 2 an Client Y 3 und Client Z 4. Es sei nun angenommen, dass Neben-Nachrichtenteil B nur für Client Y 3 bestimmt ist. Daher filtert Client Z 4 diesen Neben-Nachrichtenteil B heraus und löscht ihn. Für den Kommunikationsteilnehmer wird die Nachricht nun so dargestellt, als wäre der Neben-Nachrichtenteil B nicht empfangen worden. Bei Verwendung eines MIME-Types muss der Empfangs-Client 3, 4 nun erkennen, dass er die Nachrichtenteile selektiv betrachten und entsprechend filtern und löschen soll. Dafür kann ebenfalls der in Figur 1 beschriebene MIME-Typ ,Message-Split' genutzt werden. Client Y kann zum Beispiel erkennen, dass der unter dem MIME-Typ 'Message-Split' aufgeführte Nachrichtenteil für ihn nicht interessant ist und soll so implementiert sein, dass dieser Nachrichtenteil gelöscht und nicht angezeigt wird.

Figur 4 zeigt einen vereinfacht dargestellten Server 2, der wie in Figur 1 beschrieben eine vom Client X 1 versendete Nachricht an den Client Y 3 und den Client Z 4 entsprechend einer Kennzeichnung aufteilt und weiterleitet. Der Server 2 erhält die Nachricht über die Empfangseinheit 5. Er (2) stellt die Nachrichten gemäß Figur 1 für die Clients 3, 4 in einer Verarbeitungseinheit 6 zusammen und sendet die Nachrichten über eine Sendeeinheit 7 an die Clients 3, 4. Der Server kann sich in einem zellularen Mobilfunknetz befinden. Andere Kommunikations- und Datennetze sind ebenso vorstellbar.

## Patentansprüche

1. Verfahren zum Versand einer Nachricht mit mindestens einem als nur für einen ausgewählten Empfänger (3, 4) bestimmt gekennzeichneten Nachrichtenteil an mindestens zwei Empfänger (3, 4) über ein Kommunikationsnetz, **dadurch gekennzeichnet, dass**
in einer Nachricht an mindestens zwei Empfänger (3, 4) mittels einer in die Nachricht aufgenommenen Kennzeichnung ein nur für einen ausgewählten der Empfänger (3, 4) bestimmter Nachrichtenteil definiert und dem ausgewählten Empfänger (3, 4) zugeordnet wird,
aus der Nachricht mittels der in der Nachricht enthaltenen Kennzeichnung eine empfängerspezifische Nachricht für den ausgewählten Empfänger (3, 4) erzeugt wird, wobei die empfängerspezifische Nachricht den Nachrichtenteil enthält, und
die empfängerspezifische Nachricht nur an den ausgewählten Empfänger (3, 4) gesendet wird.

2. Verfahren nach Anspruch 1, **dadurch gekennzeichnet, dass**
aus der Nachricht mittels der in der Nachricht enthaltenen Kennzeichnung eine empfängerspezifische Nachricht für einen der Empfänger (3, 4), für den der Nachrichtenteil nicht bestimmt ist, erzeugt wird, wobei die empfängerspezifische Nachricht den Nachrichtenteil nicht enthält, und
die empfängerspezifische Nachricht an den Empfänger, für den der Nachrichtenteil nicht bestimmt ist, gesendet wird.

3. Verfahren nach einem der vorhergehenden Ansprüche, **dadurch gekennzeichnet, dass**
die Nachricht mit der darin enthaltenen Kennzeichnung an einen Client (1; 3, 4) für ein sendendes oder empfangendes Endgerät oder einen Server (2) zur Übertragung von Nachrichten zwischen sendenden und empfangenden Endgeräten (1; 3,4) bereitgestellt wird, und
der Client oder Server die Schritte, eine empfängerspezifische Nachricht zu erzeugen und diese zu senden, durchführt.

4. Verfahren nach einem der vorhergehenden Ansprüche, **dadurch gekennzeichnet, dass** für den Versand der Nachricht mit dem gekennzeichneten Nachrichtenteil nur an den/die vorgegebenen Empfänger (3, 4) die Funktionalität eines Servers (2) erweitert ist.

5. Verfahren nach einem der Ansprüche 2 bis 4, **dadurch gekennzeichnet, dass**
eine Anwendung im sendenden Endgerät (1) die empfängerspezifische Nachricht für den Empfänger (3, 4), für den der Nachrichtenteil nicht bestimmt ist, erzeugt, indem der Nachrichtenteil aus der Nachricht herausgefiltert wird, oder
eine Anwendung im empfangenden Endgerät (3, 4), für das der Nachrichtenteil nicht bestimmt ist, die empfängerspezifische Nachricht erzeugt, indem der Nachrichtenteil aus der Nachricht herausgefiltert wird.

6. Verfahren nach einem der vorhergehenden Ansprüche, **dadurch gekennzeichnet, dass** für den Versand der Nachricht mit dem gekennzeichneten Nachrichtenteil nur an den ausgewählten Empfänger (3, 4) eine Anwendung im versendenden Endgerät (1) verwendet wird.

7. Verfahren nach einem der vorhergehenden Ansprüche, **dadurch gekennzeichnet, dass** als Kennzeichnung des für nur den ausgewählten Empfänger (3, 4) bestimmten Nachrichtenteils ein MIME-Typ verwendet wird.

8. Verfahren nach Anspruch 7, **dadurch gekennzeichnet, dass** ein MIME-Typ "Message Split" verwendet wird.

9. Verfahren nach einem der vorhergehenden Ansprüche, **dadurch gekennzeichnet, dass** eine Nachricht eine Kurznachricht, eine Multimedia-Nachricht, eine elektronische Post, eine Audio-Nachricht und/oder Ähnliches ist.

10. Verfahren nach einem der vorhergehenden Ansprüche, **dadurch gekennzeichnet, dass** ein empfängerspezifischer Nachrichtenteil eine Audiodatei, eine Videodatei, eine Bilddatei, eine Applikation, eine sonstige Datei und/oder ein alphanumerischer Text ist.

11. Verfahren nach einem der vorhergehenden Ansprüche, **dadurch gekennzeichnet, dass** das Kommunikationsnetz ein zellulares Mobilfunknetz, ein Datennetz und/oder Ähnliches ist.

12. Verfahren nach einem der vorhergehenden Ansprüche, **dadurch gekennzeichnet, dass** eine Nachricht über ein Mobilfunkendgerät, ein Handheld, einen Computer, ein Notebook und/oder Ähnliches empfangen wird.

13. Vorrichtung zum Versand einer Nachricht an mindestens zwei Empfänger (3, 4) über ein Kommunikationsnetz, wobei die Nachricht einen nur für einen ausgewählten unter den Empfängern (3, 4) bestimmt gekennzeichneten Nachrichtenteil aufweist, wobei die Vorrichtung umfasst,
eine Kennzeichnungseinrichtung zum Kennzeichnen eines nur für einen ausgewählten Empfänger (3, 4) bestimmten Nachrichtenteils in einer Nachricht mittels einer in der Nachricht enthaltenen Kennzeichnung, die den für den ausgewählten Empfänger (3, 4) bestimmten Nachrichtenteil definiert und den Nachrichtenteil diesem zuordnet,
eine Erzeugungseinrichtung zum Erzeugen einer empfängerspezifischen Nachricht für den ausgewählten Empfänger (3, 4) aus der Nachricht mittels der in der Nachricht enthaltenen Kennzeichnung, so dass die empfängerspezifische Nachricht den Nachrichtenteil enthält, und
eine Sendeeinheit (7) zum Versenden der empfängerspezifischen Nachricht an den ausgewählten Empfänger (3, 4).

14. Vorrichtung nach Anspruch 13, **dadurch gekennzeichnet, dass**
die Erzeugungseinrichtung ausgelegt ist, aus der Nachricht mittels der darin enthaltenen Kennzeichnung eine empfängerspezifische Nachricht für einen Empfänger, für den der Nachrichtenteil nicht bestimmt ist, zu erzeugen, so dass die empfängerspezifische Nachricht, den Nachrichtenteil nicht enthält, und
die Sendeeinheit eingerichtet ist, die empfängerspezifische Nachricht an den Empfänger, für den der Nachrichtenteil nicht bestimmt ist, zu senden.

15. Vorrichtung nach einem der vorhergehenden Ansprüche 13 bis 14, **dadurch gekennzeichnet, dass** die Erzeugungseinrichtung ausgelegt ist, die empfängerspezifische Nachricht an den Empfänger (3, 4), für den der Nachrichtenteil nicht bestimmt ist, durch Herausfiltern des Nachrichtenteils aus der Nachricht zu erzeugen.

16. Vorrichtung nach einem der vorhergehenden Ansprüche 13 bis 15, **dadurch gekennzeichnet, dass** die Vorrichtung (1)
ein Client für ein sendendes Endgerät ist, wobei der Client (1) ausgelegt ist, die Nachricht mit der Kennzeichnung zu empfangen und empfängerspezifische Nachrichten zu erzeugen, oder
ein Server (2) zur Übertragung von Nachrichten zwischen sendenden und empfangenden Endgeräten (1, 3, 4) ist, wobei der Server (2) ausgelegt ist, die Nachricht mit der Kennzeichnung zu empfangen und empfängerspezifische Nachrichten zu erzeugen, oder
ein Client (3, 4) eines empfangenden Endgeräts ist, wobei der Client (3, 4) ausgelegt ist, die Nachricht mit Kennzeichnung zu empfangen und die für das empfangende Endgerät spezifische empfängerspezifische Nachricht zu erzeugen.

17. Vorrichtung nach einem der vorhergehenden Ansprüche 13 bis 16, **dadurch gekennzeichnet, dass** die Vorrichtung ausgelegt ist, als Element für ein Mobilfunknetz betrieben zu werden.

18. Vorrichtung nach einem der vorhergehenden Ansprüchen 13 bis 17, **dadurch gekennzeichnet, dass** die Vorrichtung ein Mobilfunkendgerät, ein Handheld, ein Computer, ein Notebook und/oder Ähnliches ist.

19. Vorrichtung nach einem der vorhergehenden Ansprüche 13 bis 18, **dadurch gekennzeichnet, dass** das Mobilfunkendgerät zum Versenden der Nachricht an die Empfänger (3, 4) für die der Nachrichtenteil nicht bestimmt ist, ohne diesen Nachrichtenteil vorgesehen ist.

20. Vorrichtung zum Empfang einer Nachricht an mindestens zwei Empfänger (3, 4) über ein Kommunikationsnetz, wobei die Nachricht einen als nur für einen ausgewählten der Empfänger (3, 4) bestimmt gekennzeichneten Nachrichtenteil aufweist, wobei die Vorrichtung umfasst, **gekennzeichnet durch**
eine Empfangseinheit (5) in einem Server (2) zum Empfangen einer Nachricht mit einer als nur für einen ausgewählten der Empfänger (3, 4) bestimmten gekennzeichneten Nachrichtenteil und einer Kennzeichnung, die den als nur für den ausgewählten Empfänger (3, 4) bestimmten Nachrichtenteil definiert und dem ausgewählten Empfänger (3, 4) zuordnet, und
eine Verarbeitungseinheit (6) in dem Server (2) zum Bearbeiten der Nachricht abhängig von der Kennzeichnung des nur für den ausgewählten Empfänger (3, 4) bestimmten Nachrichtenteils, wobei eine empfängerspezifische Nachricht für den ausgewählten Empfänger (3, 4) aus der Nachricht mittels der in der Nachricht enthaltenen Kennzeichnung erzeugt wird, so dass die empfängerspezifische Nachricht den Nachrichtenteil enthält.

21. Vorrichtung nach einem der vorhergehenden Ansprüche 13 bis 20, **dadurch gekennzeichnet, dass** die in der Nachricht enthaltene Kennzeichnung des Nachrichtenteils ein MIME-Typ ist.

22. Vorrichtung nach Anspruch 21, **dadurch gekennzeichnet, dass** der MIME-Typ der MIME-Typ "Message-Split" ist.

## Claims

1. A method of transmitting a message, which comprises at least one message part marked as being intended only for a selected receiver (3, 4), to at least two receivers (3, 4), via a communication network, **characterized in that**,
in a message to at least two receivers (3, 4), a message part intended only for a selected one of the at least two receivers (3, 4) is defined and associated to the selected receiver (3, 4) by means of a marking included in the message,
a receiver specific message for the selected receiver (3, 4) is generated from the message by means of the marking included in the message, the receiver specific message including the message part, and
the receiver specific message is transmitted only to the selected receiver (3, 4).

2. A method according to claim 1, **characterized in that**
a receiver specific message for one of the receivers (3, 4), for which the message part is not intended, is generated from the message by means of the marking included in the message, the receiver specific message not including the message part, and
the receiver specific message is transmitted only to the receiver (3, 4), for which the message part is not intended.

3. A method according to of one of the preceding claims, **characterized in that**
the message comprising the marking included therein is provided to a client (1; 3, 4) for a sending or receiving terminal or a server (2) for transmission of messages between sending and receiving terminals (1; 3, 4) and
the client or server carries out the steps of generating a receiver specific message and transmitting the same.

4. A method according to one of the preceding claims, **characterized in that**, for the transmission of the message comprising the marked message part only to the predetermined receiver(s) (3, 4), the functionality of a server (2) is enhanced.

5. A method according to one of the preceding claims 2 to 4, **characterized in that**
an application in the transmitting terminal (1) generates the receiver specific message for the receiver (3, 4), for which the message part is not intended, by filtering out the message part from the message, or
an application in the receiving terminal (3, 4), for which the message parts is not intended (3, 4), generates the receiver specific message by filtering out the message part from the message.

6. A method according to one of the preceding claims, **characterized in that** an application in the sending terminal is used for the transmission of the message comprising the marked message part only to the selected receiver (3, 4).

7. A method according to one of the preceding claims, **characterized in that** a MIME type is used for marking the message part intended only for the selected receiver (3, 4).

8. A method according to claim 7, **characterized in that** a MIME type "message-split" is used.

9. A method according to one of the preceding claims, **characterized in that** a message is a short message, a multimedia message, an electronic mail, an audio message and/or the like.

10. A method according to one of the preceding claims, **characterized in that** a receiver-specific message part is an audio file, a video file, an image file, an application, any other file and/or an alphanumeric text.

11. A method according to one of the preceding claims, **characterized in that** the communications network is a cellular mobile radio network, a data network and/or the like.

12. A method according to one of the preceding claims, **characterized in that** a message is received via a mobile radio terminal, a handheld device, a computer, a notebook and/or the like.

13. An apparatus for transmitting a message to at least two receivers (3, 4) via a communication network, wherein the message comprises a message part marked as being intended only for a selected one of the receivers (3, 4), the apparatus comprising
marking means for marking a message part, which is intended only for a selected receiver (3, 4), in a message by means of a marking included in the message, which marking defines the message part intended for the selected receiver and associates the same to the selected receiver (3, 4),
generating means for generating a receiver specific message for the selected receiver (3, 4) from the message by means of the marking included in the message such that the receiver specific message includes the message part, and
a transmission unit (7) for transmitting the receiver specific message to the selected receiver (3, 4).

14. Apparatus according to claim 13, **characterized in that** the
the generating means is adapted to generate a receiver specific message for a receiver (3, 4), for which the message part is not intended, from the message by means of the marking included in the message such that the receiver specific message does not include the message part, and
the transmission unit (7) is adapted to transmit the receiver specific message to the receiver (3, 4), for which the message part is not intended.

15. Apparatus according to one of the preceding claims 13 to 14, **characterized in that** the generating means is adapted to generate the receiver specific message for the receiver (3, 4), for which the message part is not intended, by filtering out message part from the message.

16. Apparatus according to one of the claims 13 to 15, **characterized in that** the apparatus is
a client (1) of a sending terminal, wherein the client (1) is adapted to receive the message including the marking and generate receiver specific messages,
a server (2) for transmission of messages between sending and receiving terminals (1; 3, 4), wherein the server (2) is adapted to receive the message including the marking and generate receiver specific messages, or
a client (3, 4) of a receiving terminal, wherein the client (3, 4) is adapted to receive the message including the marking and generate a receiver specific message specific for the receiving terminal.

17. Apparatus according to one of the preceding claims 13 to 16, **characterized in that** the apparatus is adapted to be operated as element for a mobile radio network.

18. Apparatus according to one of the preceding claims 13 to 17, **characterized in that** the apparatus is a mobile radio terminal, a handheld device, a computer, a notebook and/or the like.

19. Apparatus according to one of the preceding claims 13 to 18, **characterized in that** the mobile radio terminal is provided for transmitting the message to the receivers (3, 4), for which the message part is not intended, without that message part.

20. Apparatus for receiving a message to at least two receivers (3, 4) via a communication network, wherein the message comprises a message part marked as being intended only for a selected one of the receivers (3, 4), wherein the apparatus comprises, **characterized by characterized by**
a receiving unit (5) in a server (2) for receiving a message comprising a message part marked as only intended for a selected one of the receivers (3, 4) and a marking defining the message part only intended for the selected receiver (3, 4) and associating the message part to the selected receiver (3,4),
a processing unit (6) in the server (2) for processing the message in dependence from the marking of the message part only intended for the selected receiver (3, 4), wherein a receiver specific message for the selected receiver (3, 4) is generated from the message by means of the marking included in the message such that the receiver specific message includes the message part.

21. Apparatus according to one of the preceding claims 13 to 20, **characterized in that** the marking included in the message is a MIME-Typ.

22. Apparatus according to claim 21, **characterized in that** the MIME-Typ is the MIME-Typ "MESSAGE-SPLIT".

## Revendications

1. Procédé pour l'envoi à au moins deux destinataires (3, 4) d'un message pourvu d'au moins une partie de message identifiée comme étant destinée à seulement un destinataire (3, 4) sélectionné par l'intermédiaire d'un réseau de communication, **caractérisé en ce**
**que** dans un message à l'attention d'au moins deux destinataires (3, 4), une partie de message destinée à seulement un destinataire sélectionné parmi les destinataires (3, 4) est définie et est associée au destinataire (3, 4) sélectionné au moyen d'une identification figurant dans le message,
**qu'**un message spécifique au destinataire pour le destinataire (3, 4) sélectionné est généré à partir du message au moyen de l'identification contenue dans le message, le message spécifique au destinataire contenant la partie de message, et
**que** le message spécifique au destinataire, est envoyé seulement au destinataire (3, 4) sélectionné.

2. Procédé selon la revendication 1, **caractérisé en ce**
**qu'**un message spécifique au destinataire pour un des destinataires (3, 4), auquel la partie de message n'est pas destinée, est généré à partir du message au moyen de l'identification contenue dans le message, le message spécifique au destinataire ne contenant pas la partie de message, et
**que** le message spécifique au destinataire est envoyé au destinataire, auquel la partie de message n'est pas destinée.

3. Procédé selon l'une quelconque des revendications précédentes, **caractérisé en ce**
**que** le message pourvu de l'identification qu'il contient est fourni à un client (1 ; 3, 4) pour un terminal d'envoi ou de réception ou pour un serveur (2) servant à transférer des messages entre des terminaux d'envoi et des terminaux de réception (1 ; 3, 4),
et
**que** le client ou le serveur exécute les étapes visant à générer et à envoyer un message spécifique au destinataire.

4. Procédé selon l'une quelconque des revendications précédentes, **caractérisé en ce que** la fonctionnalité d'un serveur (2) est étendue seulement au/aux destinataire(s) (3, 4) spécifié(s) pour l'envoi du message pourvu de la partie de message identifiée.

5. Procédé selon l'une quelconque des revendications 2 à 4, **caractérisé en ce**
**qu'**une application génère, dans le terminal d'envoi (1), le message spécifique au destinataire pour le destinataire (3, 4), auquel la partie de message n'est pas destinée, en ce que la partie de message est extraite du message par filtrage, ou
**qu'**une application dans le terminal (3, 4) de réception, auquel la partie de message n'est pas destinée, génère le message spécifique au destinataire en ce que la partie de message est extraite du message par filtrage.

6. Procédé selon l'une quelconque des revendications précédentes, **caractérisé en ce qu'**une application est utilisée dans le terminal (1) d'envoi pour l'envoi du message pourvu de la partie de message identifiée seulement au destinataire (3, 4) sélectionné.

7. Procédé selon l'une quelconque des revendications précédentes, **caractérisé en ce qu'**un type MIME est utilisé en tant qu'identification de la partie de message destinée seulement au destinataire (3, 4) sélectionné.

8. Procédé selon la revendication 7, **caractérisé en ce qu'**un type MIME « Message Split » est utilisé.

9. Procédé selon l'une quelconque des revendications précédentes, **caractérisé en ce qu'**un message est un message court, un message multimédia, un courrier électronique, un message audio et/ou similaire.

10. Procédé selon l'une quelconque des revendications précédentes, **caractérisé en ce qu'**une partie de message spécifique au destinataire est un fichier audio, un fichier vidéo, un fichier image, une application, un tout autre fichier et/ou un texte alphanumérique.

11. Procédé selon l'une quelconque des revendications précédentes, **caractérisé en ce que** le réseau de communication est un réseau de téléphonie mobile cellulaire, un réseau de données et/ou similaire.

12. Procédé selon l'une quelconque des revendications précédentes, **caractérisé en ce qu'**un message est reçu par l'intermédiaire d'un terminal de téléphonie mobile, un appareil électronique portatif, un ordinateur, un ordinateur portable et/ou similaire.

13. Dispositif pour l'envoi d'un message à au moins deux destinataires (3, 4) par l'intermédiaire d'un réseau de communication, le message présentant une partie de message identifiée comme étant destinée seulement à un destinataire sélectionné parmi les destinataires (3, 4), le dispositif comprenant
un système d'identification servant à identifier dans un message une partie de message destinée seulement à un destinataire (3, 4) sélectionné au moyen d'une identification contenue dans le message, laquelle identification définit la partie de message destinée au destinataire (3, 4) sélectionné et associant à ce dernier la partie de message,
un système de génération servant à générer un message spécifique au destinataire pour le destinataire (3, 4) sélectionné à partir du message au moyen de l'identification contenue dans le message de sorte que le message spécifique au destinataire contient la partie de message, et
une unité d'envoi (7) servant à envoyer au destinataire (3, 4) sélectionné le message spécifique au destinataire.

14. Dispositif selon la revendication 13, **caractérisé en ce**
**que** le système de génération est configuré pour générer, à partir du message, au moyen de l'identification contenue dans ce dernier, un message spécifique au destinataire pour un destinataire, auquel la partie de message n'est pas destinée, si bien que le message spécifique au destinataire ne contient pas la partie de message, et
**que** l'unité d'envoi est mise au point pour envoyer le message spécifique au destinataire au destinataire, auquel la partie de message n'est pas destinée.

15. Dispositif selon l'une quelconque des revendications précédentes 13 à 14, **caractérisé en ce que** le système de génération est configuré pour générer le message spécifique au destinataire à l'attention du destinataire (3, 4), auquel la partie de message n'est pas destinée, en extrayant du message par filtrage la partie de message.

16. Dispositif selon l'une quelconque des revendications précédentes 13 à 15, **caractérisé en ce que** le dispositif (1)
est un client pour un terminal d'envoi, le client (1) étant configuré pour recevoir le message pourvu de l'identification et pour générer des messages spécifiques au destinataire, ou
est un serveur (2) servant à transférer des messages entre des terminaux d'envoi et des terminaux de réception (1, 3, 4), le serveur (2) étant configuré pour recevoir le message pourvu de l'identification et pour générer des messages spécifiques au destinataire, ou
est un client (3, 4) d'un terminal de réception, le client (3, 4) étant configuré pour recevoir le message pourvu de l'identification et pour générer le message spécifique au destinataire, spécifique au terminal de réception.

17. Dispositif selon l'une quelconque des revendications précédentes 13 à 16, **caractérisé en ce que** le dispositif est configuré pour fonctionner en tant qu'élément pour un réseau de téléphonie mobile.

18. Dispositif selon l'une quelconque des revendications précédentes 13 à 17, **caractérisé en ce que** le dispositif est un terminal de téléphonie mobile, un appareil électronique portatif, un ordinateur, un ordinateur portable et/ou similaire.

19. Dispositif selon l'une quelconque des revendications précédentes 13 à 18, **caractérisé en ce que** le terminal de téléphonie mobile servant à envoyer le message aux destinataires (3, 4), auxquels la partie de message n'est pas destinée, est prévu dans ladite partie de message.

20. Dispositif pour recevoir un message à l'attention d'au moins deux destinataires (3, 4) par l'intermédiaire d'un réseau de communication, le message présentant une partie de message identifiée comme étant destinée seulement à un destinataire sélectionné parmi les destinataires (3, 4), **caractérisé par** les éléments suivants qu'il comprend :
une unité de réception (5) dans un serveur (2) servant à recevoir un message pourvu d'une partie de message identifiée destinée seulement à un destinataire sélectionné des destinataires (3, 4) et pourvu d'une identification, qui définit la partie de message comme étant destinée seulement au destinataire (3, 4) sélectionné et qui l'associe au destinataire (3, 4) sélectionné,
et
une unité de traitement (6) dans le serveur (6) servant à traiter le message en fonction de l'identification de la partie de message destinée seulement au destinataire (3, 4) sélectionné, un message spécifique au destinataire pour le destinataire (3, 4) sélectionné étant généré à partir du message au moyen de l'identification contenue dans le message de sorte que le message spécifique au destinataire contient la partie de message.

21. Dispositif selon l'une quelconque des revendications précédentes 13 à 20, **caractérisé en ce que** l'identification, contenue dans le message, de la partie de message est un type MIME.

22. Dispositif selon la revendication 21, **caractérisé en ce que** le type MIME est le type MIME « Message-Split ».
